# EUROPEAN PATENT SPECIFICATION

(11) **EP 1 710 473 B1**
(45) Date of publication and mention of the grant of the patent: **14.01.2009**
(21) Application number: 06250547.4
(22) Date of filing: 01.02.2006
(51) Int. Cl.: F16H 21/44, F16H 25/18, F02B 37/24, F02C 6/12, F01D 17/16

(54) **Linkage assembly with two levers comprising a debris removing member**
Gestängeanordnung mit zwei Hebeln mit einem Schmutz entfernenden Element
Mécanisme d'articulation à deux leviers comprenant un membre écartant des contaminations

(30) Priority: 22.02.2005 US 654924 P; 04.11.2005 US 266981
(43) Date of publication of application: 11.10.2006
(73) Proprietor: BorgWarner, Inc., Auburn Hills, MI 48326-2872 (US)
(72) Inventor: Telep, Robert J., Livonia, Michigan 48154 (US); Weissinger, Peter G., Sterling Heights, Michigan 48312 (US); Busato, Murray, Clinton Township, Michigan 48035 (US)
(74) Representative: Lerwill, John

(56) References cited:
- EP-A- 0 370 258
- EP-A- 0 384 805
- EP-A- 0 448 348
- EP-A- 0 747 172
- EP-A- 1 450 020
- US-A- 4 543 839
- US-A1- 2003 136 930
- US-A1- 2004 261 413
- PATENT ABSTRACTS OF JAPAN vol. 2003, no. 12, 5 December 2003 (2003-12-05) & JP 2005 254879 A (JIDOSHA DENKI KOGYO CO LTD), 22 September 2005 (2005-09-22)

## Description

### FIELD OF THE INVENTION

The present invention relates to linkage assemblies that control boost pressure in turbochargers and their use in combination with internal combustion engines.

### BACKGROUND OF THE INVENTION

Turbochargers are generally well known in the art. The basic function of a turbocharger is to increase air flow going into the intake manifold of the engine. Increasing the pressure of the air going into the intake manifold, and hence the piston cylinders, increases the power of the engine. Turbochargers are powered by exhaust gas pressure flowing into a turbine, which in turn rotates a compressor. The compressor is connected to the intake manifold, as the compressor increases in speed, the air pressure going into the intake manifold increases as well. One method used for controlling the flow of exhaust gas into the turbine is the use of a series of vanes circumferentially spaced evenly around the turbine. The turbochargers that use vanes in the way described here are generally known as variable geometry turbochargers. As the vanes change position, the pressure of the exhaust gas flowing into the turbine can be increased or decreased. The vanes are all connected to a single ring, and as the ring rotates, the vanes change position. The ring is typically connected to a shaft; the shaft is fixed about a pivot point for rotation. As the shaft rotates about the pivot point, the ring rotates, changing the position of the vanes. Rotating the shaft is accomplished by a linkage assembly, connected to an actuator.

The torque required to move the shaft may vary with the degree of rotation. The variation is caused by friction within the vanes and by debris that can accumulate on the linkage assembly with normal usage.

A linkage is used to interconnect the shaft of the actuator and the shaft connected to the ring. The linkage also provides a mechanical advantage that will increase the torque provided by the actuator as the linkage moves through its rotation.

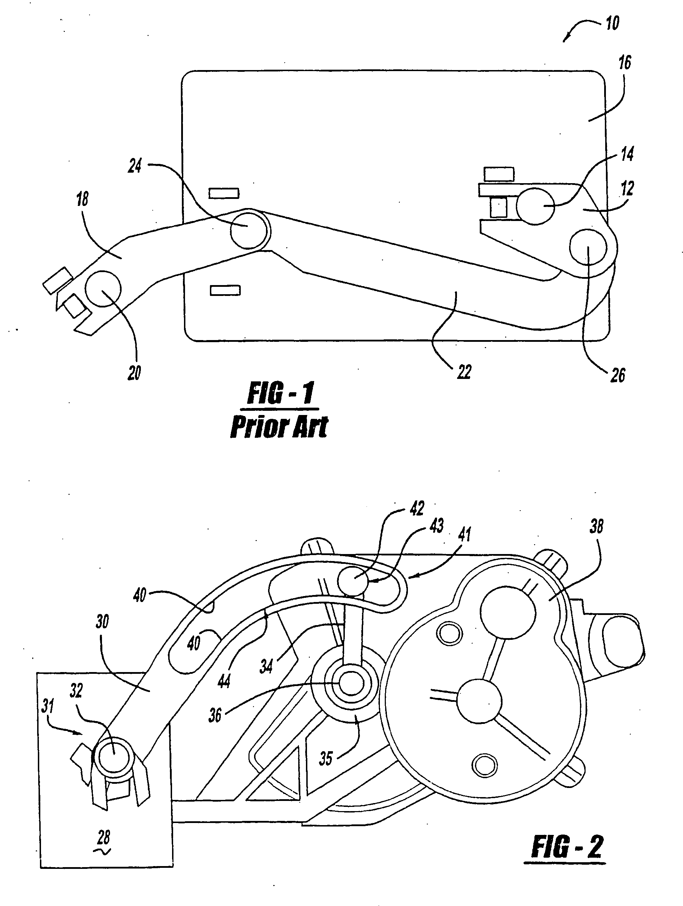

Figure 1 shows a common four-bar link prior art design at 10 with various pivot points. It consists of lever 12 attached to the shaft 14 of an actuator 16 and another lever 18 that is attached to the shaft 20 of a control mechanism (not shown). The levers 12 and 18 are joined together by a link 22, that has pivot connections 24, and 26, allowing movement therebetween. The mechanical advantage at a given shaft rotation is determined by the ratio of the effective length of the levers 12 and 18.

Typical linkage designs consist of a four-bar linkage assembly, with various pivot points. A common problem that occurs when using this type of design is the limited ability of the four-bar linkage to closely match the mechanical advantage to the torque required by the vanes through rotation. As previously mentioned, friction within the vanes and debris are the two main causes for the torque to vary with degree of rotation. The debris that builds up on the linkage is from the exhaust gases, which results from normal engine operation. Over time, the debris build up can worsen, having a greater effect on the use of the linkage.

US 2003/0136930, which document discloses the features of the preambles of claims 1, 6 and 10 discloses a rotary linkage assembly comprising a driving shaft and a driven shaft which are axially offset from one another. The driving shaft includes a pin disposed near a distal end thereof whilst the driven shaft includes a corresponding slot extending lengthwise from a distal end thereof. The pin engages through the slot whereby rotation of the driving shaft through a first angle causes rotation of the driven shaft through a second, different angle.

### SUMMARY OF THE INVENTION

The present invention provides a linkage assembly, claimed in claim 1, for obtaining a mechanical advantage comprising:
a first lever being rotatable on a first end, and having a second end, wherein said first end is connected to an actuator;
a second lever having a moveable first end connected to a device to be controlled, and having a second end; and
a mechanical connection for operably connecting said second end of said first lever with said second end of said second lever such that a variable mechanical advantage is created by varying the effective length of one or more of the levers when said actuator rotates said first lever, said second end of one lever having a pin and said second end of the other lever having a slot for receiving said pin,
characterised in that
one of said first lever or second lever possesses a means of controlling debris build up in said slot, comprising a guard member located on at least one side of said slot for preventing the build-up of debris between said pin and said slot, said guard member having edges that engage the surface of said slot for scraping debris off the surface of said slot as said pin moves along said slot

The present invention also provides a control mechanism, claimed in claim 6, having a linkage assembly comprising a two-piece lever assembly for achieving a variable mechanical advantage, comprising:
a first lever, connected to an actuator on a first end, having a pin on a second end;
a second lever, having a sloton a first end, and connected to a shaft on a second end;
   wherein said pin of said first lever is slidably disposed in said slot of said second lever,
characterised in that
means are provided for controlling debris build up in the slot comprising a guard mounted on the pin and located on at least one side of the slot for preventing the build up of debris between the pin and the slot, the guard having edges that engage the surface of the slot for scraping debris off the surface of the slot as the pin moves along the slot.

The present invention further provides a method, claimed in claim 10, of achieving a variable mechanical advantage for a control mechanism comprising the steps of:
providing a first lever connected to an actuator for rotation on a first end, and having a second end;
providing a second lever having a first end for connection to a mechanism to be controlled, and having a second end coupled to said second end of said first lever;
the second end of one lever having a pin and the second end of the other lever having a slot for receiving said pin,
rotating said first lever;
said second end of said first lever interacting via the pin and the slot with said second end of said second lever to create a variable mechanical advantage; and
rotating said second lever, thereby controlling said mechanism,
characterised by
providing means for controlling debris build up in the slot, said means comprising a guard mounted on the pin, and locating the guard on at least one side of the slot for preventing the build up of debris between the pin and the slot, the guard having edges that engage the surface of the slot for scraping debris off the surface of the slot as the pin moves along the slot.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 shows a side plan view of a conventional four-bar linkage assembly;

Figure 2 is a side plan view of the present invention;

Figure 3 is another side plan view of the present invention;

Figure 4 is an exploded side plan view of the pin and slot;

Figure 5 is an exploded perspective view of the pin and guard assembly; and

Figure 6 is an exploded perspective view of an alternate embodiment securing the guards to the pin and guard assembly according to the present invention.

### DETAILED DESCRIPTION OF THE PREFERRED EMBODIMENTS

The following description of the preferred embodiment(s) is merely exemplary in nature and is in no way intended to limit the invention, its application, or uses

Figure 2 shows a linkage arrangement in accordance with the present invention, connected to a turbocharger 28 via shaft 32. A first lever 30 has a first end shown generally at 31 connected to a shaft 32 of a control mechanism for the turbocharger. A second lever 34 has a first end shown generally at 35 that is connected to a shaft 36 which is part of an actuator portion 38 of the turbocharger 28.

The first lever 30 has an elongated slot 40 formed on the first lever 30. The slot 40 extends from a second end 41 of the first lever 30. The second lever 34 has a pin 42 located at a second end 43 of the second lever 34. The pin 42 is slidable disposed in the slot 40 to form a mechanical connection between the first and second levers 30, 34. The torque of the actuator shaft 36 causes the second lever 34 and pin 42 to rotate. The first lever 30 and the control mechanism shaft 32 will follow the movement of the second lever 34 and pin 42. The mechanical advantage of this lever arrangement, at any point through the rotation, is the ratio of the effective lever length of the first lever 30 and the effective lever length of the second lever 34.

The rate of changing the mechanical advantage through the rotation is further controlled by the shape of or contour 44 in the slot 40 of the first lever 30. Adjusting the contour 44 will provide a continuously variable rate through the rotation of the actuator shaft 36. Controlling the mechanical advantage through rotation provides a method of matching the required torque of the control mechanism to the available torque of the actuator 38. For example, a higher torque may be provided at a specific point through the rotation of the control mechanism, by adjusting the contour of the slot.

As the actuator 38 rotates the second lever 34, the pin 42 moves through the slot 40 changing the position of the second lever 34 relative to the second torque arm 30, thereby changing the amount of torque transferred therebetween.

It should be noted that the locations of the pin 42 and slot 40 could be reversed. For example, the slot 40 can be in the second lever 34 and the pin 42 can be located on the first lever 30. It is also within the scope of this invention for the pin 42 and slot 40 assembly to be replaced with some other devices to cause the same interaction between first lever 30 and second lever 34, such as a roller and cam assembly, a rack and pinion combination, or concentric shafts.

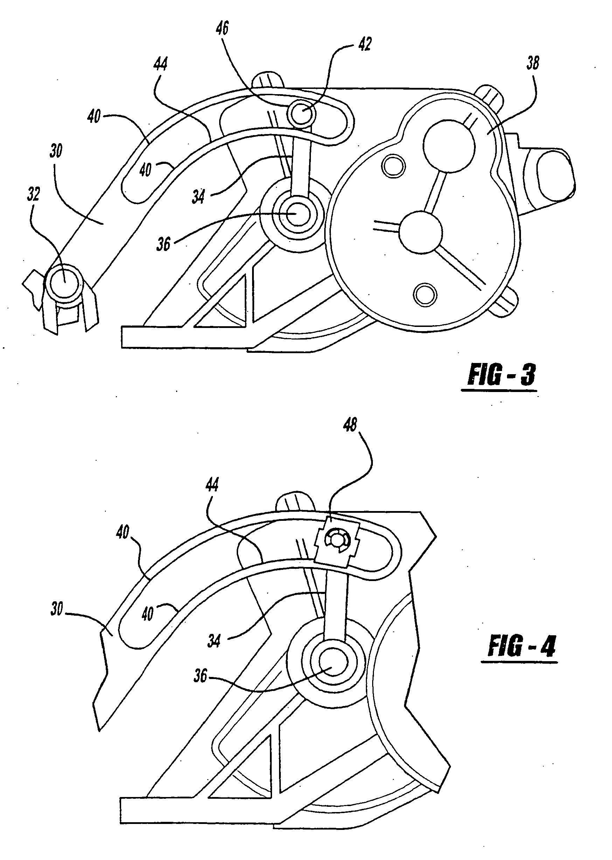

The interface of the pin 42 and the surface of the slot 40 can result in friction that will reduce the available torque to the control mechanism. In one embodiment a means of reducing friction is used to maintain the maximum amount of torque available to control the mechanism. The means can be a lubricant or low friction coating such as Teflon or boron nitride to reduce the torque loss. Alternatively a bearing, a bushing or some other type of friction reducing device is used. Figure 3 shows the addition of a bushing or bearing 46 on pin 42 that reduces the friction caused by the pin 42 moving along the surface of the slot 40. The addition of the bearing 46 reduces the friction by rolling on the surface of the contour 44. The reduction in friction increases the torque available to the control mechanism.

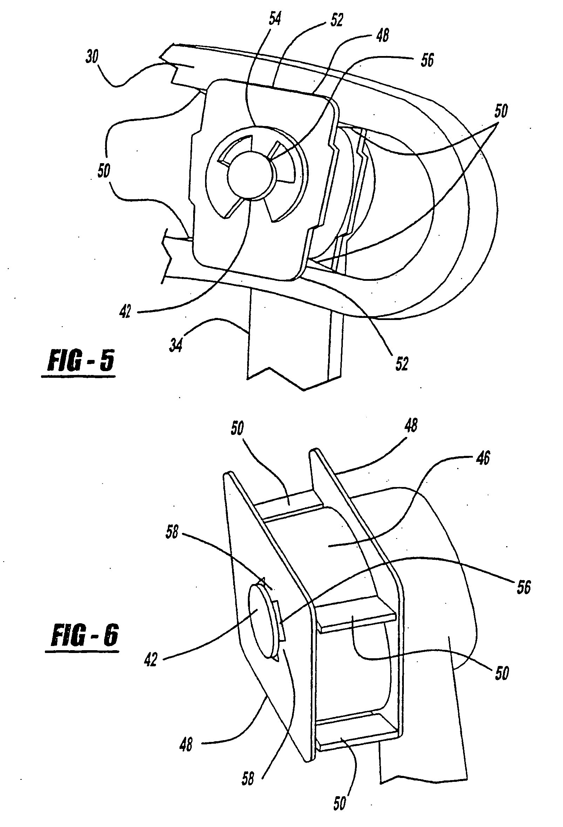

The operation of the lever arrangement may also be affected by debris such as dirt and oil. An alternate embodiment of the present invention includes a means for controlling or removing debris build-up. The means for controlling debris build- up is accomplished using a guard, a scraper or some other anti-contamination device. Figure 4 shows a guard 48 that helps in preventing debris from coming in direct contact with and affecting movement of the pin 42 or bearing 46. The guard 48 has edges 50 and 52, shown in Figure 5 that remove debris from the lever 34 and slot 40 as the pin 42 slides along the slot 40. The guards 48 are located on both sides of lever 30 and bearing 46, as shown in Figure 6, and have been designed so that a single design for the part will fit in either location.

A "C" clip 54 is inserted into groove 56 in pin 42 to secure guards 48. It is possible to otherwise adhesively bond the guard 48 to the pin 42 such as by way of welding or adhering. An alternate method of retaining the guards 48 would be to integrally form the guard 48 with the pin 42. Figure 6 shows flexible members 58 formed in guard 48 that press over pin 42 and engage in groove 56. This method eliminates the need for "C" clip 54.

The description of the invention is merely exemplary in nature and, thus, variations that do not depart from the gist of the invention are intended to be within the scope of the invention. Such variations are not to be regarded as a departure from the scope of the invention.

## Claims

1. A linkage assembly for obtaining a mechanical advantage comprising:
a first lever (30) being rotatable on a first end (31), and having a second end (41), wherein said first end (31) is connected to an actuator;
a second lever (34) having a moveable first end (35) connected to a device to be controlled, and having a second end (43); and
a mechanical connection for operably connecting said second end (41) of said first lever (30) with said second end (43) of said second lever (34) such that a variable mechanical advantage is created by varying the effective length of one or more of the levers when said actuator rotates said first lever (30), the mechanical connection comprising a pin (42) disposed at said second end (43) of one lever (34) and a slot (40) for receiving the pin (42) located at said second end (41) of the other lever (30),
**characterised in that**
one of said first lever (30) or second lever (34) possesses a means of controlling debris build up in said slot (40), comprising a guard member (48) located on at least one side of said slot(40) for preventing the build-up of debris between said pin (42) and said slot (40), said guard member (48) having edges (50, 52) that engage the surface of said slot (40) for scraping debris off the surface of said slot (40) as said pin moves along said slot (40).

2. A linkage assembly according to claim 1, wherein said pin is placed on said second lever (34), and said slot (40) is placed on said first lever (30).

3. A linkage assembly according to claim 1 or 2, wherein said mechanical connection has a means of reducing friction (46).

4. A linkage assembly according to any one of the preceding claims, wherein said second end (41) of said first lever (30) has a roller, and said second end (43) of said second lever (34) has a cam.

5. A linkage assembly according to any one of claims 1 to 4, wherein said linkage assembly is used for controlling the vanes in a variable geometry turbocharger.

6. A control mechanism having a linkage assembly comprising a two-piece lever assembly for achieving a variable mechanical advantage, comprising:
a first lever (30), connected to an actuator on a first end (31), having a pin (42) on a second end (41);
a second lever (34), having a slot (40) on a first end (43), and connected to a shaft (36) on a second end (35);
wherein said pin (42) of said first lever (30) is slidably disposed in said slot (40) of said second lever (34),
**characterised in that**
means are provided for controlling debris build up in the slot (40) comprising a guard (48) mounted on the pin (42) and located on at least one side of the slot (40) for preventing the build up of debris between the pin (42) and the slot (40), the guard (48) having edges (50, 52) that engage the surface of the slot (40) for scraping debris off the surface of the slot (40) as the pin moves along the slot.

7. A control mechanism according to claim 6, wherein said slot (40) is elongated and extends along the length of said second lever (34), providing a contour and changing the effective lever length of said second lever (34) and said first lever (30).

8. A control mechanism according to claim 6 or 7, wherein said pin (42) includes a means to reduce friction when moving through said slot (40).

9. A control mechanism according to any one of claims 6 to 8, wherein said guard (48) on said pin (42) has two plates mounted on each end of the pin (42).

10. A method of achieving a variable mechanical advantage for a control mechanism comprising the steps of:
providing a first lever (30) connected to an actuator for rotation on a first end (31), and having a second end (41);
providing a second lever (34) having a first end (35) for connection to a mechanism to be controlled, and having a second end (43) coupled to said second end (41) of said first lever (30);
the second end (43) of one lever (34) having a pin (42) and the second end (41) of the other lever (30) having a slot (40) for receiving said pin (42),
rotating said first lever (30);
said second end (41) of said first lever (30) interacting via the pin (42) and the slot (40) with said second end (43) of said second lever (34) to create a variable mechanical advantage; and
rotating said second lever (34), thereby controlling said mechanism,
**characterised by**
providing means for controlling debris build up in the slot (40), said means comprising a guard (48) mounted on the pin (42), and locating the guard (48) on at least one side of the slot (40) for preventing the build up of debris between the pin (42) and the slot (40), the guard (48) having edges (50, 52) that engage the surface of the slot (40) for scraping debris off the surface of the slot (40) as the pin (42) moves along the slot.

11. A method according to claim 10, further comprising the step of providing a friction reducing device on said second end (41) of said first lever (30).

12. A method according to claim 10 or 11, further comprising the step of providing said guard (48) with two flat pieces fixed to the ends of said pin (42).

## Patentansprüche

1. Gestängeanordnung zur Erlangung eines mechanischen Vorteils mit
einem ersten Hebel (30), der an einem ersten Ende (31) drehbar ist und ein zweites Ende (41) hat, wobei das erste Ende (31) mit einem Stellglied verbunden ist,
einem zweiten Hebel (34) mit einem beweglichen ersten Ende (35), das mit einer zu steuernden Vorrichtung verbunden ist, und einem zweiten Ende (43) und
einer mechanischen Verbindung zur betriebsmäßigen Verbindung des zweiten Endes (41) des ersten Hebels (30) mit dem zweiten Ende (43) des zweiten Hebels (34), so dass ein variabler mechanischer Vorteil erzeugt wird, indem die wirksame Länge eines oder mehrerer der Hebel variiert wird, wenn das Stellglied den ersten Hebel (30) dreht, wobei die mechanische Verbindung einen am zweiten Ende (43) eines Hebels (34) angeordneten Stift (42) und einen am zweiten Ende (41) des anderen Hebels (30) angeordneten Schlitz (40) zur Aufnahme des Stifts (42) umfasst, **dadurch gekennzeichnet, dass**
der erste Hebel (30) oder der zweite Hebel (34) ein Mittel zur Steuerung von im Schlitz (40) angesammeltem Schmutz besitzt, das ein Schutzelement (48) umfasst, das an mindestens einer Seite des Schlitzes (40) angeordnet ist, um zu verhindern, dass sich zwischen dem Stift (42) und dem Schlitz (40) Schmutz ansammelt, wobei das Schutzelement (48) Ränder (50, 52) hat, die die Oberfläche des Schlitzes (40) in Eingriff nehmen, um Schmutz von der Oberfläche des Schlitzes (40) abzukratzen, wenn sich der Stift am Schlitz (40) entlang bewegt.

2. Gestängeanordnung nach Anspruch 1, wobei der Stift am zweiten Hebel (34) platziert ist und der Schlitz (40) am ersten Hebel (30) platziert ist.

3. Gestängeanordnung nach Anspruch 1 oder 2, wobei die mechanische Verbindung ein Mittel (46) zur Reduzierung von Reibung hat.

4. Gestängeanordnung nach einem der vorhergehenden Ansprüche, wobei das zweite Ende (41) des ersten Hebels (30) eine Rolle und das zweite Ende (43) des zweiten Hebels (34) einen Nocken hat.

5. Gestängeanordnung nach einem der Ansprüche 1 bis 4, wobei die Gestängeanordnung zur Steuerung der Schaufeln in einem Turbolader mit variabler Geometrie verwendet wird.

6. Steuermechanismus mit einer Gestängeanordnung mit einer zweiteiligen Hebelanordnung zur Erlangung eines variablen mechanischen Vorteils mit
einem ersten Hebel (30), der an einem ersten Ende (31) mit einem Stellglied verbunden ist und am zweiten Ende (41) einen Stift (42) hat,
einem zweiten Hebel (34), der einen Schlitz (40) an einem ersten Ende (43) hat und an einem zweiten Ende (35) mit einer Welle (36) verbunden ist,
wobei der Stift (42) des ersten Hebels (30) gleitend im Schlitz (40) des zweiten Hebels (34) angeordnet ist,
**dadurch gekennzeichnet, dass**
Mittel zur Steuerung von im Schlitz (40) angesammeltem Schmutz vorgesehen sind, die ein Schutzelement (48) umfassen, das am Stift (42) montiert und an mindestens einer Seite des Schlitzes (40) angeordnet ist, um zu verhindern, dass sich zwischen dem Stift (42) und dem Schlitz (40) Schmutz ansammelt, wobei das Schutzelement (48) Ränder (50, 52) hat, die die Oberfläche des Schlitzes (40) in Eingriff nehmen, um Schmutz von der Oberfläche des Schlitzes (40) abzukratzen, wenn sich der Stift am Schlitz entlang bewegt.

7. Steuermechanismus nach Anspruch 6, wobei der Schlitz (40) länglich ist und sich entlang der Länge des zweiten Hebels (34) erstreckt, für eine Kontur sorgt und die wirksame Hebellänge des zweiten Hebels (34) und des ersten Hebels (30) ändert.

8. Steuermechanismus nach Anspruch 6 oder 7, wobei der Stift (42) ein Mittel zur Reduzierung von Reibung, wenn dieser sich durch den Schlitz (40) bewegt, aufweist.

9. Steuermechanismus nach einem der Ansprüche 6 bis 8, wobei das Schutzelement (48) an dem Stift (42) zwei Platten hat, die an jedem Ende des Stifts (42) montiert sind.

10. Verfahren zur Erlangung eines variablen mechanischen Vorteils für einen Steuermechanismus mit folgenden Schritten:
Bereitstellung eines ersten Hebels (30), der zur Drehung an einem ersten Ende (31) mit einem Stellglied verbunden ist und ein zweites Ende (41) hat,
Bereitstellung eines zweiten Hebels (34) mit einem ersten Ende (35) zur Verbindung mit einem zu steuernden Mechanismus und einem zweiten Ende (43), das an das zweite Ende (41) des ersten Hebels (30) gekoppelt ist,
wobei das zweite Ende (43) eines Hebels (34) einen Stift (42) und das zweite Ende (41) des anderen Hebels (30) einen Schlitz (40) zur Aufnahme des Stifts (42) hat,
Drehen des ersten Hebels (30),
wobei das zweite Ende (41) des ersten Hebels (30) über den Stift (42) und den Schlitz (40) mit dem zweiten Ende (43) des zweiten Hebels (34) zusammenwirkt, um einen variablen mechanischen Vorteil zu erzeugen, und
Drehen des zweiten Hebels (34), wodurch der Mechanismus gesteuert wird,
**gekennzeichnet durch**
die Bereitstellung von Mitteln zur Steuerung von im Schlitz (40) angesammeltem Schmutz, die ein Schutzelement (48) umfassen, die am Stift (42) montiert sind und das Schutzelement (48) an mindestens einer Seite des Schlitzes (40) platzieren, um zu verhindern, dass sich zwischen dem Stift (42) und dem Schlitz (40) Schmutz ansammelt, wobei das Schutzelement (48) Ränder (50, 52) hat, die die Oberfläche des Schlitzes (40) in Eingriff nehmen, um Schmutz von der Oberfläche des Schlitzes (40) abzukratzen, wenn sich der Stift (42) am Schlitz entlang bewegt.

11. Verfahren nach Anspruch 10, ferner mit dem Schritt der Bereitstellung einer Reibungsreduzierungsvorrichtung am zweiten Ende (41) des ersten Hebels (30).

12. Verfahren nach Anspruch 10 oder 11, ferner mit dem Schritt des Bereitstellens von zwei flachen Teilen an den Enden des Stifts (42) an dem Schutzelement (48).

## Revendications

1. Système de tringlerie permettant d'obtenir un avantage mécanique, comprenant :
un premier levier (30) pouvant tourner sur une première extrémité (31) et ayant une deuxième extrémité (41), dans lequel ladite première extrémité (31) est connectée à un actionneur ;
un deuxième levier (34) ayant une première extrémité mobile (35) connectée à un dispositif à commander, et ayant une deuxième extrémité (43) ; et
une connexion mécanique pour connecter fonctionnellement ladite deuxième extrémité (41) dudit premier levier (30) à ladite deuxième extrémité (43) dudit deuxième levier (34) de telle sorte que l'on obtienne un avantage mécanique variable en faisant varier la longueur effective d'un ou de plusieurs des leviers lorsque ledit actionneur fait tourner ledit premier levier (30), la connexion mécanique comprenant une goupille (42) disposée à une deuxième extrémité (43) d'un levier (34) et une fente (40) pour recevoir la goupille (42), située à ladite deuxième extrémité (41) de l'autre levier (30),
**caractérisé en ce que**
l'un desdits premier levier (30) et deuxième levier (34) possède un moyen pour contrôler les débris accumulés dans ladite fente (40), comprenant un organe de protection (48) situé sur au moins un côté de ladite fente (40) pour empêcher l'accumulation de débris entre ladite goupille (42) et ladite fente (40), ledit organe de protection (48) ayant des bords (50, 52) qui s'engagent avec la surface de ladite fente (40) pour racler les débris de la surface de ladite fente (40) à mesure que ladite goupille se déplace le long de ladite fente (40).

2. Système de tringlerie selon la revendication 1, dans lequel ladite goupille est placée sur ledit deuxième levier (34), et ladite fente (40) est placée sur ledit premier levier (30).

3. Système de tringlerie selon la revendication 1 ou 2, dans lequel ladite connexion mécanique a un moyen de réduction des frottements (46).

4. Système de tringlerie selon l'une quelconque des revendications précédentes, dans lequel ladite deuxième extrémité (41) dudit premier levier (30) a un rouleau, et ladite deuxième extrémité (43) dudit deuxième levier (34) a une came.

5. Système de tringlerie selon l'une quelconque des revendications 1 à 4, dans lequel ledit système de tringlerie est utilisé pour commander les ailettes dans un turbocompresseur à géométrie variable.

6. Mécanisme de commande ayant un système de tringlerie comprenant un système de levier en deux parties permettant d'obtenir un avantage mécanique variable, comprenant :
un premier levier (30), connecté à un actionneur sur une première extrémité (31), ayant une goupille (42) sur une deuxième extrémité (41) ;
un deuxième levier (34), ayant une fente (40) sur une première extrémité (43) et connecté à une tige (36) sur une deuxième extrémité (35),
ladite goupille (42) dudit premier levier (30) étant disposée de manière coulissante dans ladite fente (40) dudit deuxième levier (34),
**caractérisé en ce que**
des moyens sont prévus pour contrôler l'accumulation de débris dans la fente (40), comprenant une protection (48) montée sur la goupille (42) et située sur au moins un côté de la fente (40) pour empêcher l'accumulation de débris entre la goupille (42) et la fente (40), la protection (48) ayant des bords (50, 52) qui s'engagent avec la surface de la fente (40) pour racler les débris de la surface de la fente (40) à mesure que la goupille se déplace le long de la fente.

7. Mécanisme de commande selon la revendication 6, dans lequel ladite fente (40) est allongée et s'étend le long de la longueur dudit deuxième levier (34), en fournissant un contour et en changeant la longueur effective dudit deuxième levier (34) et dudit premier levier (30).

8. Mécanisme de commande selon la revendication 6 ou 7, dans lequel ladite goupille (42) comporte un moyen pour réduire les frottements lorsqu'elle se déplace à travers ladite fente (40).

9. Mécanisme de commande selon l'une quelconque des revendications 6 à 8, dans lequel ladite protection (48) sur ladite goupille (42) a deux plaques montées sur chaque extrémité de la goupille (42).

10. Procédé pour obtenir un avantage mécanique variable pour un mécanisme de commande, comprenant les étapes suivantes :
fournir un premier levier (30) connecté à un actionneur permettant la rotation sur une première extrémité (31) et ayant une deuxième extrémité (41) ;
fournir un deuxième levier (34) ayant une première extrémité (35) pour la connexion à un mécanisme à contrôler, et ayant une deuxième extrémité (43) accouplée à ladite deuxième extrémité (41) dudit premier levier (30) ;
la deuxième extrémité (43) d'un levier (34) ayant une goupille (42) et la deuxième extrémité (41) de l'autre levier (30) ayant une fente (40) pour recevoir ladite goupille (42),
faire tourner ledit premier levier (30) ;
ladite deuxième extrémité (41) dudit premier levier (30) coopérant par le biais de la goupille (42) et de la fente (40) avec ladite deuxième extrémité (43) dudit deuxième levier (34) pour créer un avantage mécanique variable ; et
faire tourner ledit deuxième levier (34), et contrôler ainsi ledit mécanisme,
**caractérisé par** l'étape consistant à
fournir des moyens pour contrôler l'accumulation de débris dans la fente (40), lesdits moyens comprenant une protection (48) montée sur la goupille (42) et positionner la protection (48) sur au moins un côté de la fente (40) pour empêcher l'accumulation de débris entre la goupille (42) et la fente (40), la protection (48) ayant des bords (50, 52) qui s'engagent avec la surface de la fente (40) pour racler les débris de la surface de la fente (40) à mesure que la goupille (42) se déplace le long de la fente.

11. Procédé selon la revendication 10, comprenant en outre l'étape consistant à fournir un dispositif de réduction des frottements sur ladite deuxième extrémité (41) dudit premier levier (30).

12. Procédé selon la revendication 10 ou 11, comprenant en outre l'étape consistant à munir ladite protection (48) de deux pièces plates fixées aux extrémités de ladite goupille (42).
